Europäisches Patentamt

(19) European Patent Office

Office européen des brevets

(11) Publication number: **0 099 380**
**B1**

(12) **EUROPEAN PATENT SPECIFICATION**

(45) Date of publication of patent specification: 02.09.87

(21) Application number: **83900416.5**

(22) Date of filing: **27.01.83**

(86) International application number:
**PCT/DK83/00009**

(87) International publication number:
**WO 83/02664 04.08.83 Gazette 83/18**

(51) Int. Cl.⁴: **G 01 K 7/00, A 61 J 17/00**

(54) **Temperature measuring device.**

(30) Priority: **27.01.82 DK 356/82**

(43) Date of publication of application:
**01.02.84 Bulletin 84/05**

(45) Publication of the grant of the patent:
**02.09.87 Bulletin 87/36**

(84) Designated Contracting States:
**AT BE CH DE FR GB LI NL SE**

(56) References cited:
**DE-A-2 649 048**
**DE-B-2 751 952**
**GB-A-1 390 173**
**US-A-3 237 139**
**US-A-3 913 402**
**US-A-3 968 690**
**US-A-4 009 615**
**US-A-4 072 054**

**Patent Abstracts of Japan, Vol. 5 No 096, P67,**
**abstract of JP 56-39434, published 1981-04-15**

(73) Proprietor: **CHRISTOFFERSEN, Steen Rupert**
**Engerodvej 23**
**DK-3200 Helsinge (DK)**

(72) Inventor: **CHRISTOFFERSEN, Steen Rupert**
**Engerodvej 23**
**DK-3200 Helsinge (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The present invention relates to a temperature measuring device in the form of a nipple of a baby's comforter, comprising a nipple body, a flange member fastened to the nipple body; a temperature sensor embedded in the nipple body material, conductor means for connection of said sensor to an electronic measuring equipment, at least part of said conductor means adjacent to said sensor being embedded in said nipple body material, said electronic measuring equipment including electronic temperature measuring means for generation of temperature measuring results based on the signals provided by the temperature sensor, power supply means, and display means for displaying said temperature measuring results.

Such a temperature measuring device is known from DE—B—2,751,952. This publication describes a hand-held instrument having a rigid, nipple-shaped probe. The known device, however, is not satisfactory since the hand-held instrument, having relative large dimensions, is probably perceived by the baby as an unfamiliar object, and the rigid, nipple-shaped probe itself is probably perceived as an unpleasing, delusive device which will not be accepted by a baby. Consequently, there is a need for a measuring device of the above kind which is perceived by a baby as a conventional comforter having a nipple of familiar flexibility and homogeneity.

This need is fulfilled by a measuring device of the above kind which, in accordance with the present invention, is characterized in that said nipple body is of flexible material, in that at least the part of the conductor means embedded in the nipple body material is tortuously shaped, in that the flange member is provided with connector means establishing connection to said conductor means and in that said electronic temperature measuring means, said power supply means and said display means are arranged within said flange.

By embedding the sensor and at least part of the conductor means adjacent to the sensor in the nipple body material, a measuring device may be provided which is perceived by a baby as a conventional comforter, and which has a highly homogeneous nipple body without lumps of other anormalities, and the tortuous shape allows the conductor means to adapt itself to deformation of the nipple body, even when it is exposed to strong masticatory or sucking stresses.

It is observed that in Patent Abstracts of Japan, Vol. 5, No. 096, page 67 abstract of JP—56-39434 a temperature measuring device in the form of a nipple of a baby's comforter is known. The specific construction of the connection between the temperature sensor in the nipple body and the temperature measuring means, however, is not shown in that publication.

The tortuous shape of the conductor means may be provided by a conductor which is formed into any tortuous geometrical shape which preferably does not provide any sharp bendings or points of gradient discontinuity, e.g. a meander curve. In the preferred embodiment of the invention, the conductor means is constituted by a substantially helically wound conductor, and the conductor itself is constituted by a substantially helically wound metal wire. By providing the conductor in the form of such a twin helically wound metal wire, the flexibility is increased as compared with a solid conductor wound into a single helix.

The metal of the metal wire of the conductor means may be selected from the group of metal fulfilling the requirements of electrical and thermal conductivity, physical strength and flexibility, and inertness. A metal wire of a metal, such as a noble metal, i.e. a silver, gold, or platinum wire, may advantageously be employed for the conductor means of the measuring device according to the invention. These inert materials are, however, extremely expensive, and consequently, a stainless steel wire of a thickness of approximately 0.01—0.04 mm is employed in the preferred embodiment of the invention.

The nipple body may have any appropriate shape which gives the user, i.e. a baby, the feeling of familiarity. Consequently, in the preferred embodiment of the invention the nipple body is formed in a conventional manner having a bulb-shaped end. In order to further increase the feeling of familiarity and increase the homogeneity, the nipple body is preferably a hollow rubber nipple body having a wall thickness of approximately 1 mm, preferably 0.8—1 mm. In this preferred embodiment, the sensor is advantageously arranged at the bulb-shaped end of the nipple body so that the sensor is always kept in the oral cavity of the body when the measuring device is in use.

The part of the conductor means adjacent to the sensor preferably is arranged immediately adjacent to the outer surface of the nipple body. The conductor means, which are normally made of a material showing relatively high electrical conductivity, and which also exhibit relatively high thermal conductivity, increases the thermal responsiveness of the measuring device when arranged immediately adjacent to the outer surface of the nipple body. It has been found that the part of the conductor means adjacent to the sensor may establish a good thermal connection between the temperature sensor and the outer surface of the nipple body, when the said part of the conductor means is arranged immediately adjacent to the outer surface of the nipple body.

The temperature sensor may be any electronic device which exhibits a well-defined temperature dependency, but preferably is a thermistor and, more specifically, a wafer thermistor having dimensions less than 1 mm × 1 mm × 1 mm, preferably approximately 0.9 mm × 0.9 mm × 0.7 mm (0.036 inch × 0.036 inch × 0.029 inch). The small dimensions of the wafer thermistor further contribute to the homogeneity of the nipple body, since the wafer thermistor when embedded within the nipple body wall does not substantially provide any noticeable lumps within the nipple body wall or any substantial discontinuity of the nipple body material.

The present invention will now be further described with reference to the drawings, wherein:

Fig. 1 is a perspective view of a first embodiment of an electronic temperature measuring device according to the invention;

Fig. 2 is a sectional view of the device shown in Fig. 1;

Fig. 3 is a perspective view of a slightly modified embodiment of the device shown in Figs. 1 and 2;

Fig. 4 is a fragmentary sectional view of the device shown in Fig. 3.

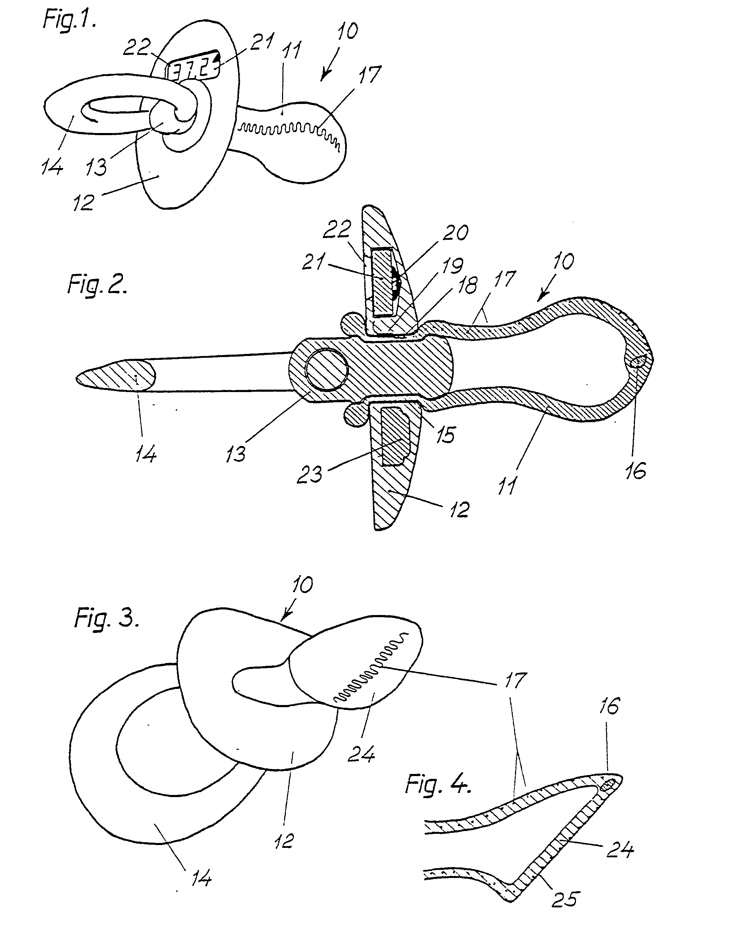

Figs. 1 and 2 show a first embodiment of an electronic temperature measuring device according to the invention in the form of a baby's comforter 10. The device 10 comprises a nipple body 11, a flange member 12, a fixation member 13, and a ring member 14. The nipple body 11, which is a conventionally shaped, bulb-ended, hollow rubber nipple body, is fixed in a central hole 15 of the flange member 12 by means of the fixation member 13. The nipple body 11 is at its bulb-shaped end provided with a thermistor 16 which is embedded within the wall of the hollow nipple body. Conductors 17 (only one shown on the drawing) leading from the thermistor 16 are embedded in the wall of the nipple body 11. The conductor 17 is a metal wire of an inert metal, e.g. a silver, gold or platinum wire, or a stainless steel wire wound into a twin helix further formed into a meander curve. In the present context, the term twin helix means that the wire is wound into a first helix constituting a first conductor which is then wound into a second, larger helix constituting a second conductor, which is then formed into the meander curve shown on the drawings. At least the part of the conductors adjacent to the thermistor 16 are arranged immediately adjacent to the outer surface of the nipple body so that the conductors which also exhibit a good thermal conductivity conducts heat to the thermistor 16 from the outer surface of the nipple body. At the end opposite to the bulb-shaped end, the nipple body 11 is provided with connectors 18 (only one shown on the drawing). Each of the connectors 18 is electrically connected with the conductor 17. When arranging the nipple body 11 within the central hole 15 of the flange member 12, the each of the connectors 18 is brought in electrical contact with a mating connector 19 only one of which is shown at the interior wall of the central bore 15. The connectors 19 are connected to an electronic circuit 20 which constitutes an electronic temperature measuring means for generation of temperature measuring results based on measuring results obtained by means of the thermistor 16. The electronic circuit 20 is an LSI (Large Scale Integration)-circuit which is arranged at the rear surface of a liquid crystal display (LCD) 21 in electrically conductive relationship therewith. The liquid crystal display is arranged within a recess 22 of the flange member 12 and the front surface of the liquid crystal display is visible through a window of the flange member. For the power supply of the electronic circuit 20 a preferably replaceable battery 23 is provided.

In Figs. 3 and 4, a slightly modified embodiment, relative to the embodiment of the invention shown in Figs. 1 and 2 is shown. The embodiment shown in Figs. 3 and 4 differs from the embodiment shown in Figs. 1 and 2 in having a nipple body 24 of a different geometrical shape. While the nipple body 11 shown in Figs. 1 and 2 is a substantially rotational symmetrical nipple body, the nipple body 24 has a plane lower surface 25 which is intended to be brought into intimate contact with a baby's tongue.

In the embodiment shown in Figs. 1 and 2, and the slightly modified embodiment shown in Fig. 3, the circuit 20 is preferably provided with a threshold circuit and a timer circuit, so that the entire electronic circuit is turned on when the temperature detected by means of the thermistor 16 exceeds a predetermined threshold temperature, e.g. a temperature of 35°C, and so that the entire circuit is automatically turned off after a predetermined time period, e.g. a time period of 3 min., when the temperature detected by the thermistor 16 drops below the same threshold temperature of e.g. 35°C.

The nipple body 11 may be replaced by extracting the fixation member 13 from within the central hole 15 of the flange member 12. Thereafter, the nipple body presently arranged protruding from the flange member 12 is replaced by a new one, and the fixation member 13 is remounted in the central hole 15 as shown in Fig. 2. Consequently, the entire measuring device may be reused, e.g. for use in connection with a new patient, i.e. another baby, or after a baby has bitten through the nipple body 11 and the conductor 17.

**Claims**

1. A temperature measuring device (10) in the form of a nipple of a baby's comforter, comprising a nipple body (11), a flange member (12, 40) fastened to the nipple body, a temperature sensor (16) embedded in the nipple body material, conductor means (17) for connection of said sensor to an electronic measuring equipment, at least part of said conductor means adjacent to said sensor being embedded in said nipple body material, said electronic measuring equipment including electronic temperature measuring means (20) for generation of temperature measuring results based on the signals provided by the temperature sensor (16), power supply means (23), and display means for displaying said temperature measuring results, characterized in that said nipple body (11) is of flexible material, in that at least the part of the conductor means embedded in the nipple body material is tortuously shaped, in that the flange member is provided with connector means establishing connection to said conductor means and in that said electronic temperature measuring means (20), said power supply means (23) and said display means (21) are arranged within said flange (12, 40).

2. A device according to claim 1, wherein the conductor means (17) are constituted by a substantially helically wound conductor.

3. A device according to claim 2, wherein the conductor itself is constituted by a substantially helically wound metal wire.

4. A device according to claim 3, wherein the wire is a stainless steel wire of a thickness of approximately 0.01—0.04 mm.

5. A device according to any of the preceding claims, wherein the nipple body (11) has a bulb-shaped end, and is a hollow rubber nipple body having a wall thickness of approximately 1 mm, preferably 0.8—1 mm.

6. A device according to claim 5, wherein the sensor (16) is arranged at the bulb-shaped end of the nipple body (11).

7. A device according to any of the preceding claims, wherein at least said part of the conductor means (17) adjacent to the sensor is arranged immediately adjacent to the outer surface of the nipple body (11).

8. A device according to claim 7, wherein the temperature sensor (16) is a thermistor.

9. A device according to claim 8, wherein the thermistor (16) is a wafer thermistor having dimensions less than 1 mm × 1 mm × 1 mm, preferably approximately 0.9 mm × 0.9 mm × 0.7 mm.

**Patentansprüche**

1. Temperaturmessgerät (10) in Form eines Schnullersaugers, mit einem Saugerkörper (11), einem am Saugerkörper befestigten Randteil (12, 40), einem im Material des Saugerkörpers eingebetteten Temperaturfühler (16), Leitermitteln (17) zum Verbinden des genannten Fühlers mit einer elektronischen Messeinrichtung, wobei mindestens ein Teil dieser Leitermittel nahe dem Fühler im Material des Saugerkörpers eingebettet ist, welche elektronische Messeinrichtung elektronische Temperaturmesselemente (20) zur Erzielung von Temperaturmessresultaten auf Basis der durch den Temperaturfühler (16) erzeugten Signale, Stromversorgungsmittel (23) und Anzeigemittel zum Anzeigen der Temperaturmessresultate umfasst, dadurch gekennzeichnet, dass der Saugerkörper (1) aus flexiblem Material besteht, dass mindestens der Teil der im Material des Saugerkörpers eingebetteten Leitermittel eine gewundene Form aufweist, dass der Randteil mit Verbindungsmitteln zur Herstellung einer Verbindung mit den Leitermitteln versehen ist, und dass die elektronischen Temperaturmesselemente (20), die Stromversorgungsmittel (23) und die Anzeigemittel (21) im Randteil (12, 40) angeordnet sind.

2. Gerät nach Anspruch 1, in dem die Leitermittel (17) durch einen im wesentlichen spiralförmig gewundenen Leiter gebildet sind.

3. Gerät nach Anspruch 2, in dem der Leiter selbst durch einen im wesentlichen spiralförmig gewundenen Metalldraht gebildet ist.

4. Gerät nach Anspruch 3, in dem der Draht ein rostfreier, ungefähr 0,01 bis 0,04 mm dicker Stahldraht ist.

5. Gerät nach einem der vorhergehenden Ansprüche, in dem der Saugerkörper (11) ein wulstartiges Ende aufweist und ein hohler Gummisaugerkörper mit einer ungefähr 1 mm, vorzugsweise 0,8 bis 1 mm, dicken Wand ist.

6. Gerät nach Anspruch 5, in dem der Fühler (16) am wulstartigen Ende des Saugerkörpers (11) angeordnet ist.

7. Gerät nach einem der vorhergehenden Ansprüche, in dem mindestens der Teil der Leitermittel (17) nahe dem Fühler in unmittelbar Nähe der Aussenfläche des Saugerkörpers (11) angeordnet ist.

8. Gerät nach Anspruch 7, in dem der Temperaturfühler (16) ein Thermistor ist.

9. Gerät nach Anspruch 8, in dem der Thermistor (16) eine Waferthermistor ist, dessen Abmessungen weniger als 1 mm × 1 mm × 1 mm, vorzugweise ungefähr 0,9 mm × 0,9 mm × 0,7 mm, betragen.

**Revendications**

1. Un dispositif de mesure de température (10) ayant la forme d'une tétine de bébé, comprenant un corps de tétine (11), un organe de bride (12, 40) fixé au corps de tétine, un détecteur de température (16) encastré dans la matériau du corps de tétine, des moyens conducteurs (17) pour coupler ledit détecteur à un équipement de mesure électronique, au moins une partie desdits moyens conducteurs voisine dudit détecteur étant encastrée dans ledit matériau du corps de tétine, ledit équipement de mesure électronique comprenant des moyens de mesure de température électroniques (20) pour la production de résultats de mesure de température basés sur les signaux fournis par le détecteur de température (16), des moyens d'alimentation d'énergie (23) et des moyens d'affichage pour afficher lesdits résultats de mesure de température, caractérisé en ce que ledit corps de tétine (11) est d'un matériau flexible, en ce qu'au moins la partie des moyens conducteurs encastrée dans le matériau du corps de tétine a une forme tortueuse, en ce que l'organe de bride est muni de moyens de couplage effectuant une connexion audits moyens conducteurs et en ce que lesdits moyens de mesure de température électroniques (20), lesdits moyens d'alimentation d'énergie (23) et lesdits moyens d'affichage (21) sont arrangés à l'intérieur de ladite bride (12, 40).

2. Un dispositif selon la revendication 1, dans lequel les moyens conducteur (17) sont constitués par un conducteur enroulé substantiellement en hélice.

3. Un dispositif selon la revendication 2, dans lequel le conducteur lui-même est constitué par un fil métallique enroulé substantiellement en hélice.

4. Un dispositif selon la revendication 3, dans lequel le fil est un fil en acier inoxydable ayant une épaisseur d'environ 0,01—0,04 mm.

5. Un dispositif selon l'une quelconque des revendications précédentes, dans lequel le corps de tétine (11) a une extrémité bulbeuse et est un corps de tétine creux en caoutchouc ayant une épaisseur de paroi d'environ 1 mm, de préférence 0,8—1 mm.

6. Un dispositif selon la revendication 5, dans lequel le détecteur (16) est arrangé à l'extrémité bulbeuse du corps de tétine (11).

7. Un dispositif selon l'une quelconque des revendications précédentes, dans lequel au moins ladite partie des moyens conducteurs (17) voisine du détecteur est arrangée immédiatement voisine de la surface extérieure du corps de tétine (11).

8. Un dispositif selon la revendication 7, dans lequel le détecteur de température (16) est un thermistor.

9. Un dispositif selon la revendication 8, dans lequel le thermistor (16) est un thermistor micro-plaquette ayant des dimensions de moins de 1 mm × 1 mm × 1 mm, de préférence environ 0,9 mm × 0,9 mm × 0,7 mm.

Fig.1.

Fig.2.

Fig. 3.

Fig. 4.